# EUROPÄISCHE PATENTSCHRIFT

(11) **EP 4 080 025 B1**
(45) Veröffentlichungstag und Bekanntmachung des Hinweises auf die Patenterteilung: **26.06.2024**
(21) Anmeldenummer: 22162374.7
(22) Anmeldetag: 16.03.2022
(51) Int. Cl.: F01N 3/20, F01N 3/28, B01F 23/213, B01F 25/314, B01F 25/421, B01F 25/422

(54) **ABGAS/REAKTIONSMITTEL-MISCHANORDNUNG**
EXHAUST GAS/REACTION AGENT MIXING UNIT
AGENCEMENT DE MÉLANGE DE GAZ D'ÉCHAPPEMENT / DE CHARGE

(30) Priorität: 19.04.2021 DE 102021109777
(43) Veröffentlichungstag der Anmeldung: 26.10.2022
(73) Patentinhaber: Purem GmbH, 66539 Neunkirchen (DE)
(72) Erfinder: Kast, Peter, Esslingen (DE); Többen, Heike, Uhingen (DE); Weinmann, Philipp, Esslingen (DE); Vyelyayev, Oleksander, Stuttgart (DE); Wolf, Tobias, Köngen (DE); Rothfuss, Mathias, Waiblingen (DE)
(74) Vertreter: Ruttensperger Lachnit Trossin Gomoll

(56) Entgegenhaltungen:
- EP-A1- 4 056 819
- DE-A1-102014 222 698
- DE-A1-102019 117 459
- DE-A1-102019 210 877
- US-A1- 2020 131 974

## Beschreibung

Die vorliegende Erfindung betrifft eine Abgas/Reaktionsmittel-Mischanordnung für eine Abgasanlage einer Brennkraftmaschine, beispielsweise in einem Fahrzeug, mit welcher das von der Brennkraftmaschine ausgestoßene Abgas effizient mit in das Abgas eingespritztem Reaktionsmittel, beispielsweise einer Harnstoff/WasserLösung, durchmischt werden kann.

Zur Verringerung des Stickoxidanteils in von einer Diesel-Brennkraftmaschine ausgestoßenem Abgas ist es bekannt, in einer SCR-Katalysatoranordnung eine selektive katalytische Reduktion durchzuführen. Dazu wird stromaufwärts der SCR-Katalysatoranordnung ein Reaktionsmittel, beispielsweise eine Harnstoff/WasserLösung, in das Abgas eingespritzt. Vor dem Einleiten in die SCR-Katalysatoranordnung muss eine effiziente Durchmischung von Abgas und Reaktionsmittel erfolgen. Dabei besteht das Problem, dass beispielsweise bedingt durch eine Kondensation des im Allgemeinen in flüssiger Form eingespritzten Reaktionsmittels an einer Innenoberfläche eines den Abgasstrom führenden Gehäuses flüssiges Reaktionsmittel sich ansammeln und Ablagerungen bilden kann. Eine nicht ausreichende Durchmischung von Abgas und Reaktionsmittel kann weiter dazu führen, dass ein Teil des flüssigen Reaktionsmittels in die SCR-Katalysatoranordnung gelangt und somit für eine effiziente Durchführung einer katalytischen Reaktion im Wesentlichen nicht zur Verfügung steht. Die Gefahr einer nicht ausreichenden Durchmischung von Reaktionsmittel und Abgas ist vor allem dann gegeben, wenn für einen kompakten Aufbau einer Abgasanlage der Abstand zwischen dem Ort, an welchem das Reaktionsmittel beispielsweise im Wesentlichen orthogonal zum Abgasstrom eingespritzt wird, und der SCR-Katalysatoranordnung in Strömungsrichtung vergleichsweise gering ist.

Eine Abgas/Reaktionsmittel-Mischanordnung gemäß dem Oberbegriff des Anspruchs 1 ist aus der DE 10 2019 210 877 A1 bekannt. Bei dieser Abgas/Reaktionsmittel-Mischanordnung wird das in einem Gemischerzeugungsbereich erzeugte und im Wesentlichen in einer Reaktionsmittel-Hauptabgaberichtung näherungsweise orthogonal zu einer Gehäuselängsachse eines Abgasführungsgehäuses strömende Gemisch aus Abgas und Reaktionsmittel an einer die Gehäuselängsachse kreisartig umgebenden Prallplatte im Wesentlichen in einer zur Gehäuselängsachse orthogonalen Ebene in Umfangsrichtung umgelenkt. Das zunächst in Umfangsrichtung umgelenkte Gemisch aus Abgas und Reaktionsmittel strömt dann näherungsweise in Richtung der Gehäuselängsachse zu in einer stromabwärtigen Stirnwand gebildeten Ausströmöffnungen.

Aus der DE 10 2014 222 698 A2 ist eine Abgas/Reaktionsmittel-Mischanordnung bekannt, bei welcher das in einem Gemischerzeugungsbereich gebildete Gemisch aus Abgas und Reaktionsmittel den Gemischerzeugungsbereich durch eine in einer eine Mischkammer in Richtung stromabwärts begrenzenden, stromabwärtigen Stirnwand gebildete Ausströmöffnung im Wesentlichen in Richtung einer Gehäuselängsachse eines Abgasführungsgehäuses verlässt.

Aus der US 2020/0131974 A1 ist eine Abgas/Reaktionsmittel-Mischanordnung bekannt, bei welcher durch zwei Einströmöffnungen in den Bereich einer Mischkammer einströmendes Abgas beim Einströmen in einen Gemischerzeugungsbereich im Wesentlichen in Umfangsrichtung umgelenkt wird. Das den Gemischerzeugungsbereich verlassende Gemisch aus Abgas und Reaktionsmittel wird beim Ausströmen aus dem Gemischerzeugungsbereich erneut im Wesentlichen in Umfangsrichtung umgelenkt.

Es ist die Aufgabe der vorliegenden Erfindung, eine Abgas/Reaktionsmittel-Mischanordnung vorzusehen, welche bei kompaktem Aufbau eine effiziente Durchmischung von Abgas und Reaktionsmittel gewährleistet.

Erfindungsgemäß wird diese Aufgabe gelöst durch eine Abgas/Reaktionsmittel-Mischanordnung für eine Abgasanlage einer Brennkraftmaschine zur Durchmischung von Abgas und Reaktionsmittel gemäß Anspruch 1. Diese Abgas/Reaktionsmittel-Mischanordnung umfasst:
- ein in Richtung einer Gehäuselängsachse sich erstreckendes Abgasführungsgehäuse mit einer Gehäusewand, wobei in dem Abgasführungsgehäuse ein von der Gehäusewand umgebener und von Abgas durchströmbarer Abgaskanal gebildet ist,
- eine Mischzone mit einer zwischen einer stromaufwärtigen Stirnwand und einer stromabwärts bezüglich der stromaufwärtigen Stirnwand angeordneten stromabwärtigen Stirnwand gebildeten Mischkammer,
- eine an dem Abgasführungsgehäuse getragene Reaktionsmittelabgabeanordnung zur Abgabe von Reaktionsmittel in die Mischkammer im Wesentlichen entlang einer Reaktionsmittelabgabelinie in einer Reaktionsmittel-Hauptabgaberichtung,
wobei in der stromaufwärtigen Stirnwand wenigstens eine erste Einströmöffnung vorgesehen ist, wobei über die wenigstens eine erste Einströmöffnung ein stromaufwärts bezüglich der stromaufwärtigen Stirnwand liegender Bereich des Abgaskanals zu der Mischkammer offen ist, wobei in der stromabwärtigen Stirnwand wenigstens eine erste Ausströmöffnung vorgesehen ist, wobei über die wenigstens eine erste Ausströmöffnung die Mischkammer zu einem stromabwärts bezüglich der stromabwärtigen Stirnwand liegenden Bereich des Abgaskanals offen ist, wobei die wenigstens eine erste Ausströmöffnung und die wenigstens eine erste Einströmöffnung quer zur Gehäuselängsachse zueinander versetzt sind und einander im Wesentlichen nicht überlappen, wobei in der Mischkammer ein von der wenigstens einen ersten Einströmöffnung zu der wenigstens einen ersten Ausströmöffnung führender Gemischströmungsweg gebildet ist, wobei der Gemischströmungsweg zwei in einer Gemischströmungsrichtung aufeinander folgende Strömungsablenkbereiche mit zueinander entgegengesetzt gerichteten Strömungsablenkrichtungen aufweist. Dabei können beispielsweise die wenigstens eine erste Ausströmöffnung und die wenigstens eine erste Einströmöffnung quer zur Gehäuselängsachse zueinander versetzt sein und so angeordnet sein, dass sie einander im Wesentlichen nicht überlappen.

Bei der erfindungsgemäß aufgebauten Abgas/Reaktionsmittel-Mischanordnung wird durch die mehrfachen Umlenkung bzw. Ablenkung des Gemischstroms aus Abgas und Reaktionsmittel beim Durchströmen des Gemischströmungswegs in zueinander entgegengesetzt gerichteten Strömungsablenkrichtungen durch die dabei auftretenden Verwirbelungen und Turbulenzen im Gemischstrom eine effiziente Durchmischung von Abgas und Reaktionsmittel erreicht. Dazu trägt auch bei, dass durch die Struktur des Gemischströmungswegs die zur Durchströmung zur Verfügung stehende Querschnittsfläche des Abgasführunsgehäuses effizient ausgenutzt wird.

Der Gemischströmungsweg umfasst in der Gemischströmungsrichtung aufeinander folgend:
- einen Gemischerzeugungsbereich, wobei zur Erzeugung eines Gemisches aus Abgas und Reaktionsmittel in dem Gemischerzeugungsbereich die wenigstens eine erste Einströmöffnung zu dem Gemischerzeugungsbereich offen ist und die Reaktionsmittelabgabeanordnung Reaktionsmittel in den Gemischerzeugungsbereich abgibt,
- einen in der Gemischströmungsrichtung auf den Gemischerzeugungsbereich folgenden ersten Strömungsablenkbereich, wobei im ersten Strömungsablenkbereich das aus dem Gemischerzeugungsbereich zum ersten Strömungsablenkbereich strömende Gemisch aus Abgas und Reaktionsmittel in einer ersten Strömungsablenkrichtung abgelenkt wird,
- einen in der Gemischströmungsrichtung auf den ersten Strömungsablenkbereich folgenden zweiten Strömungsablenkbereich, wobei im zweiten Strömungsablenkbereich das aus dem ersten Strömungsablenkbereich zum zweiten Strömungsablenkbereich strömende Gemisch aus Abgas und Reaktionsmittel in einer der ersten Strömungsablenkrichtung entgegengesetzten zweiten Strömungsablenkrichtung abgelenkt wird,
- einen in der Gemischströmungsrichtung auf den zweiten Strömungsablenkbereich folgenden und zu der wenigstens einen ersten Ausströmöffnung führenden Gemischabgabebereich.

Um in der Mischkammer die gewünschte Strömungsführung zu erreichen und dafür die verschiedenen Bereiche des Gemischströmungswegs bereitstellen zu können, kann der Gemischerzeugungsbereich im Wesentlichen zwischen einer zwischen der stromaufwärtigen Stirnwand und der stromabwärtigen Stirnwand sich erstreckenden ersten Trennwand und einer zwischen der stromaufwärtigen Stirnwand und der stromabwärtigen Stirnwand sich erstreckenden zweiten Trennwand begrenzt sein, wobei die wenigstens eine erste Einströmöffnung zwischen der ersten Trennwand und der zweiten Trennwand angeordnet ist und die erste Trennwand die wenigstens eine erste Ausströmöffnung gegen direkte Anströmung aus der wenigstens einen ersten Einströmöffnung abschirmt.

Für eine wirksame Strömungsführung kann die erste Trennwand sich ausgehend von der Gehäusewand zwischen der wenigstens einen ersten Einströmöffnung und der wenigstens einen ersten Ausströmöffnung erstrecken, oder/und kann die erste Trennwand eine erste Strömungsablenkwand des ersten Strömungsablenkbereichs bereitstellen.

Ferner kann zur Bereitstellung der angestrebten Strömungsführung eine zwischen der stromaufwärtigen Stirnwand und der stromabwärtigen Stirnwand sich erstreckende dritte Trennwand vorgesehen sein, wobei die dritte Trennwand eine Strömungsablenkwand des zweiten Strömungsablenkbereichs bereitstellt oder/und zusammen mit der ersten Trennwand den Gemischabgabebereich begrenzt.

Die dritte Trennwand kann sich entlang eines Umfangsbereichs der Gehäusewand mit radialem Abstand zur Gehäusewand erstrecken, wobei die dritte Trennwand zusammen mit der Gehäusewand einen Abgasströmungsraum begrenzt. Durch diesen Abgasströmungsraum wird bereichsweise die Mischkammer bezüglich der Gehäusewand abgeschirmt, so dass die Gefahr, dass auf die Gehäusewand auftreffendes Gemisch aus Abgas und Reaktionsmittel kondensiert bzw. sich an der insbesondere in einer Startphase des Betriebs einer Brennkraftmaschine kalten Gehäusewand niederschlägt, im Wesentlichen eliminiert werden kann.

Um eine vollständige strömungstechnische Entkopplung der Mischkammer von dem Abgasströmungsraum zu erreichen, wird vorgeschlagen, dass der Abgasströmungsraum durch die dritte Trennwand von der Mischkammer getrennt ist, dass in der stromaufwärtigen Stirnwand wenigstens eine zweite Einströmöffnung vorgesehen ist, wobei über die wenigstens eine zweite Einströmöffnung der stromaufwärts bezüglich der stromaufwärtigen Stirnwand liegende Bereich des Abgaskanals zu dem Abgasströmungsraum offen ist, und dass in der stromabwärtigen Stirnwand wenigstens eine zweite Ausströmöffnung vorgesehen ist, wobei über die wenigstens eine zweite Ausströmöffnung der Abgasströmungsraum zu dem stromabwärts bezüglich der stromabwärtigen Stirnwand liegenden Bereich des Abgaskanals offen ist.

Dabei können für eine effiziente Durchströmung des Abgasströmungsraums mit Abgas die wenigstens eine zweite Ausströmöffnung und die wenigstens eine zweite Einströmöffnung quer zur Gehäuselängsachse zueinander versetzt sein und einander im Wesentlichen nicht überlappen.

Bei einer alternativen Ausgestaltung kann der Abgasströmungsraum in einem ersten Umfangsbereich zu dem Gemischerzeugungsbereich offen sein und in einem zweiten Umfangsendbereich zu dem Gemischabgabebereich oder/und der wenigstens einen ersten Ausströmöffnung offen sein. Dabei wird also ein Teil des in die Mischzone eingeleiteten Abgases nicht in die Mischkammer, sondern in den Abgasströmungsraum geleitet, um dadurch eine thermische Entkopplung der dritten Trennwand von der Gehäusewand zu erreichen bzw. die dritte Trennwand an ihrer vom Gemischströmungsweg abgewandten Seite zu erwärmen.

Dabei kann für einen einfach zu realisierenden Aufbau die dritte Trennwand mit der zweiten Trennwand einstückig ausgebildet sein.

Für eine effiziente Ausnutzung des zur Verfügung stehenden Volumens zur Durchmischung von Abgas und Reaktionsmittel kann der Gemischströmungsweg eine im Wesentlichen S-förmige Struktur aufweisen.

Um auch vergleichsweise große Volumenströme durch die Mischzone hindurch leiten zu können, wird vorgeschlagen, dass eine Mehrzahl von in Umfangsrichtung aufeinanderfolgenden ersten Ausströmöffnungen vorgesehen ist.

Dabei kann eine Querschnittsabmessung der ersten Ausströmöffnungen in Richtung von dem Gemischabgabebereich weg abnehmen.

Eine effiziente Durchmischung von Abgas und Reaktionsmittel bereits beim Zusammenführen dieser beiden Medien kann dadurch unterstützt werden, dass die Reaktionsmittelabgabeanordnung derart bezüglich der wenigstens einen ersten Einströmöffnung angeordnet ist, dass die Reaktionsmittelabgabelinie sich über die wenigstens eine erste Einströmöffnung hinweg erstreckt. Ferner wird eine kompakte Bauart bei vergleichsweise langen Strömungsweg dadurch erreichbar, dass die Reaktionsmittelabgabeanordnung derart bezüglich der wenigstens einen ersten Einströmöffnung angeordnet ist, dass die Reaktionsmittelabgabelinie die Gehäuselängsachse nicht schneidet, zu dieser also beispielsweise windschief angeordnet ist

Die Erfindung betrifft ferner eine Abgasanlage für eine Brennkraftmaschine, umfassend eine erfindungsgemäß aufgebaute Abgas/Reaktionsmittel-Mischanordnung und stromabwärts der Abgas/Reaktionsmittel-Mischanordnung eine SCR-Katalysatoranordnung.

Aufgrund der in der Abgas-Hauptströmungsrichtung sehr kompakten Bauweise der erfindungsgemäßen Abgas/Reaktionsmittel-Mischanordnung eignet sich diese ganz besonders für einen Aufbau, bei welchem stromaufwärts bezüglich der Abgas/Reaktionsmittel-Mischanordnung eine Abgasbehandlungseinheit, vorzugsweise Partikelfilteranordnung, angeordnet ist. Insbesondere können dabei die verschiedenen Systembereiche Abgasbehandlungseinheit, Abgas/Reaktionsmittel-Mischanordnung und SCR-Katalysatoranordnung in der Abgas-Hauptströmungsrichtung im Wesentlichen linear aufeinanderfolgend angeordnet sein.

Die vorliegende Erfindung wird nachfolgend mit Bezug auf die bei den Figuren detailliert beschrieben. Es zeigt:
- Fig. 1: eine prinzipielle Längsschnittansicht einer Abgasanlage mit einer Abgas/Reaktionsm ittel-M ischanordnung;
- Fig. 2: eine prinzipielle Querschnittansicht der Abgasanlage der Fig. 1, geschnitten längs einer Linie II-II in Fig. 1;
- Fig. 3: eine der Fig. 1 entsprechende Darstellung einer alternativen Ausgestaltungsform einer Abgasanlage mit einer Abgas/Reaktionsmittel-Mischanordnung;
- Fig. 4: eine prinzipielle Querschnittansicht der Abgasanlage der Fig. 3, geschnitten längs einer Linie IV-IV in Fig. 3.

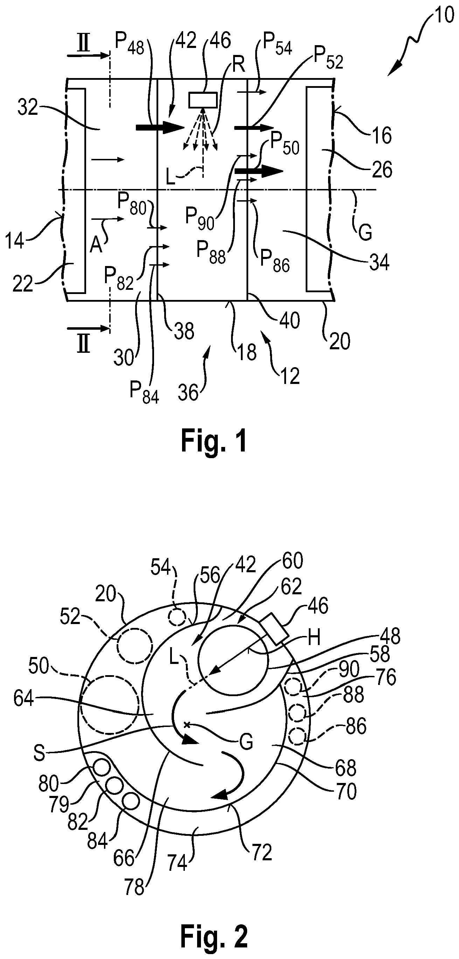

In Fig. 1 ist ein Abschnitt einer allgemein mit 10 bezeichneten Abgasanlage einer Brennkraftmaschine beispielsweise in einem Fahrzeug dargestellt. Diese Abgasanlage 10 umfasst als zentralen Bestandteil eine Abgas/Reaktionsmittel-Mischanordnung 12, die in der Abgasanlage 10 beispielsweise stromabwärts einer Partikelfilteranordnung 14 und stromaufwärts einer SCR-Katalysatoranordnung 16 angeordnet sein kann.

Die Abgas/Reaktionsmittel-Mischanordnung 12 umfasst ein beispielsweise rohrartiges, in Richtung einer Gehäuselängsachse G langgestrecktes Abgasführungsgehäuse 18 mit einer im Wesentlichen zylindrisch und beispielsweise mit kreisrundem Querschnitt ausgebildeten Gehäusewand 20. In diesem Abgasführungsgehäuse 18 kann stromaufwärts bezüglich der Abgas/Reaktionsmittel-Mischanordnung 12 die Partikelfilteranordnung 14 getragen sein. Beispielsweise kann die Partikelfilteranordnung 14 einen monolithisch aufgebauten Partikelfilterblock 22 umfassen, der von einer Fasermatte oder dergleichen umwickelt in dem Abgasführungsgehäuse 18 getragen ist. Auch die stromabwärts der Abgas/Reaktionsmittel-Mischanordnung 12 angeordnete SCR-Katalysatoranordnung 16 kann in dem Abgasführungsgehäuse 18 getragen sein und kann einen beispielsweise monolithisch aufgebauten Katalysatorblock 26 umfassen, der durch eine diese umgebende Fasermatte oder dergleichen in dem Abgasführungsgehäuse 18 getragen sein kann.

Es ist darauf hinzuweisen, dass die Abgasanlage 10 bzw. das Abgasführungsgehäuse 18 in mehrere in einer Abgas-Hauptströmungsrichtung A aufeinanderfolgende und beispielsweise miteinander verbunden Segmente unterteilt sein kann, von welchen beispielsweise eines der Segmente die Partikelfilteranordnung 14 enthalten kann, eines der Segmente die nachfolgend detailliert beschriebene Abgas/Reaktionsmittel-Mischanordnung 12 enthalten bzw. bereitstellen kann, und eines der Segmente die SCR-Katalysatoranordnung 16 enthalten kann.

In dem Abgasführungsgehäuse 18 ist ein von Abgas im Wesentlichen in der Abgas-Hauptströmungsrichtung A durchströmbarer Abgaskanal 30 gebildet, wobei der Abgaskanal 30 einen stromaufwärts bezüglich der Abgas/Reaktionsmittel-Mischanordnung 12 liegenden Kanalbereich 32 und einen stromabwärts bezüglich der Abgas/Reaktionsmittel-Mischanordnung 12 liegenden Kanalbereich 34 aufweist.

Eine Mischzone 36 ist in Richtung stromaufwärts, also zum Kanalbereich 32 hin, durch eine stromaufwärtige Stirnwand 38 begrenzt. Ferner ist die Mischzone 36 in Richtung stromabwärts, also zum Kanalbereich 34 hin, durch eine bezüglich der stromaufwärtigen Stirnwand 38 in Richtung stromabwärts entlang der Gehäuselängsachse G versetzt angeordnete stromabwärtige Stirnwand 40 begrenzt.

In Richtung der Gehäuselängsachse G ist zwischen den beiden beispielsweise zueinander parallel und zur Gehäuselängsachse G orthogonal angeordneten Stirnwänden 38, 40 eine Mischkammer 42 der Mischzone 36 gebildet. Ferner ist in Zuordnung zu der Mischzone 36 eine allgemein auch als Injektor bezeichnete Reaktionsmittelabgabeanordnung 46 vorgesehen, die beispielsweise vermittels eines Stutzens an der Gehäusewand 20 des Abgasführungsgehäuses 18 getragen ist und dazu ausgebildet ist, ein Reaktionsmittel R, beispielsweise eine Harnstoff/WasserLösung, beispielsweise in Form eines Sprühkegels in einer Reaktionsmittel-Hauptabgaberichtung H in die Mischzone 36 abzugeben. Dabei kann die Reaktionsmittel-Hauptabgaberichtung H entlang einer Reaktionsmittelabgabelinie L orientiert sein, welche in einer bezüglich der Gehäuselängsachse G orthogonalen Ebenen liegen kann. Die Reaktionsmittel-Hauptabgaberichtung H bzw. die Reaktionsmittelabgabelinie L kann beispielsweise der Mittenlinie eines von der Reaktionsmittelabgabeanordnung 46 abgegebenen Sprühkegels des Reaktionsmittels R entsprechen.

In der stromaufwärtigen Stirnwand 38 ist exzentrisch zur Gehäuselängsachse G eine erste Einströmöffnung 48 gebildet. Durch die erste Einströmöffnung 48 hindurch kann, wie durch einen Strömungspfeil P₄₈ angedeutet, Abgas aus dem Kanalbereich 32 in die Mischkammer 42 eintreten.

In der stromabwärtigen Stirnwand 40 sind in Umfangsrichtung aufeinanderfolgend drei erste Ausströmöffnungen 50, 52, 54 vorgesehen, durch welche hindurch ein Gemisch aus Abgas und Reaktionsmittel R aus der Mischkammer 42 in den Kanalbereich 34 ausströmen kann, wie in Fig. 1 durch Strömungspfeile P₅₀, P₅₂, P₅₄ angedeutet. Dabei repräsentiert die Dicke der in Fig. 1 erkennbaren Strömungspfeile P₄₈, P₅₀, P₅₂, P₅₄ jeweils den durch eine jeweilige Einströmöffnung bzw. Ausströmöffnung hindurch geleiteten Volumenstrom und somit auch deren Querschnittsfläche.

In der Mischzone 36 sind zwischen den Stirnwänden 38, 40 sich im Wesentlichen in Richtung der Gehäuselängsachse G erstreckende erste und zweite Trennwände 56, 58 vorgesehen. Die erste Trennwand 56 erstreckt sich, ausgehend von der Gehäusewand 20, in die Mischkammer 42 zwischen der in der stromaufwärtigen Stirnwand 38 vorgesehenen ersten Einströmöffnung 48 und den in der stromabwärtigen Stirnwand 40 vorgesehenen ersten Ausströmöffnungen 50, 52, 54. Dabei erstreckt sich die erste Trennwand 56 in Umfangsrichtung entlang der Innenseite der Gehäusewand 20 mit zunehmendem radialen Abstand zu dieser und umgibt die erste Einströmöffnung 48 in Umfangsrichtung mit gleichermaßen zunehmendem Abstand zu dieser.

Die zweite Trennwand 58 erstreckt sich, ebenfalls ausgehend von der Gehäusewand 20, an der anderen Umfangsseite der ersten Einströmöffnung 48 und umgibt diese in einem Teilbereich ihres Umfangs.

Zwischen der ersten Trennwand 56 und der zweiten Trennwand 58, die in ihren axialen Endbereichen an die Stirnwände 38, 40 anschließen und mit diesen beispielsweise durch Materialschluss verbunden sein können und in ihrem an die Gehäusewand 20 anschließenden Endbereich an die Gehäusewand 20 angebunden sein können, ist ein Gemischerzeugungsbereich 60 eines allgemein mit 62 bezeichneten und von der ersten Einströmöffnung 48 zu den ersten Ausströmöffnungen 50, 52, 54 führenden Gemischströmungswegs gebildet. In den Gemischerzeugungsbereich 60 tritt Abgas aus dem Kanalbereich 32 in die Mischkammer 42 ein. Gleichermaßen wird das Reaktionsmittel R entlang der Reaktionsmittelabgabelinie L in den Gemischerzeugungsbereich 60 eingespritzt. Die Fig. 2 zeigt deutlich, dass die Reaktionsmittelabgabelinie L sich im Wesentlichen quer über die erste Einströmöffnung 48 hinweg erstreckt, so dass das von der Reaktionsmittelabgabeanordnung 46 abgegebene Reaktionsmittel R im Wesentlichen direkt von dem durch die erste Einströmöffnung 48 hindurch strömenden Abgasstrom erfasst wird und bereits dadurch mit diesem vermischt wird.

Das im Gemischerzeugungsbereich 60 erzeugte Gemisch aus Abgas und Reaktionsmittel R strömt dann aus dem Gemischerzeugungsbereich 60 entlang des Gemischströmungswegs 62 zu einem allgemein mit 64 bezeichneten ersten Strömungsablenkbereich. Der erste Strömungsablenkbereich 64 umfasst als wesentlichen Bestandteil einen eine erste Strömungsablenkwand 66 bereitstellenden Abschnitt der bogenartig um die erste Einströmöffnung 48 sich erstreckenden ersten Trennwand 56. Das im Gemischerzeugungsbereich 60 erzeugte Gemisch aus Abgas und Reaktionsmittel R trifft im ersten Strömungsablenkbereich 64 auf die durch einen Abschnitt der ersten Trennwand 56 bereitgestellte erste Strömungsablenkwand 66 und wird somit zur Strömung entlang des Gemischströmungswegs 62 in einer Gemischströmungsrichtung S in einer ersten Ablenkrichtung abgelenkt. In der Darstellung der Fig. 2 ist dies, betrachtet in der Gemischströmungsrichtung S, eine Ablenkung nach links.

Auf den ersten Ablenkbereich 64 folgt in der Gemischströmungsrichtung R ein zweiter Strömungsablenkbereich 68. Der zweite Strömungsablenkbereich 68 ist im Wesentlichen bereitgestellt durch einen eine zweite Strömungsablenkwand 70 bereitstellenden Abschnitt einer allgemein mit 72 bezeichneten dritten Trennwand. Auch die dritte Trennwand 72 erstreckt sich in Richtung der Gehäuselängsachse G zwischen den beiden Stirnwänden 38, 40 und kann an diese beispielsweise durch Materialschluss angebunden sein. In einem ihrer Umfangsendbereiche schließt die dritte Trennwand 72 an die zweite Trennwand 58 an, so dass ein zwischen der dritten Trennwand 72 und der Gehäusewand 20 gebildeter Abgasströmungsraum 74 in einem ersten Umfangsendbereich 76 durch die zweite Trennwand 58 abgeschlossen ist. In seinem zweiten Umfangsendbereich 79 ist der Abgasströmungsraum 74 durch die bis an die Gehäusewand 20 nach radial außen herangeführte dritte Trennwand 72 abgeschlossen, so dass grundsätzlich eine im Wesentlichen vollständige strömungstechnische Trennung des Abgasströmungsraums 74 von der Mischkammer 42 realisiert ist.

Das aus dem ersten Strömungsablenkbereich 64 in den zweiten Strömungsablenkbereich 68 geleitete Gemisch aus Abgas und Reaktionsmittel wird am zweiten Strömungsablenkbereich 68 durch die zweite Strömungsablenkwand 70 in einer der ersten Ablenkrichtung im ersten Strömungsablenkbereich 64 entgegengesetzten zweiten Strömungsablenkrichtung abgelenkt und in einen zwischen der ersten Trennwand 56, insbesondere auch dem der ersten Strömungsablenkwand 66 derselben, und der dritten Trennwand 72 gebildeten Gemischabgabebereich geleitet. Diese Ablenkung in der zweiten Strömungsablenkrichtung erfolgt insbesondere auch daher, da der zweite Strömungsablenkbereich 68 durch die zweite Trennwand 58 zum Gemischerzeugungsbereich 60 hin abgegrenzt ist und somit eine Zurückströmung des Gemisches aus Abgas und Reaktionsmittel R in den Gemischerzeugungsbereich 60 nach dem Durchströmen des ersten Strömungsablenkbereichs 64 nicht möglich ist. In der Darstellung der Fig. 2 ist die Ablenkung in der zweiten Strömungsablenkrichtung, betrachtet in der Gemischströmungsrichtung S, eine Ablenkung nach rechts.

Das den Gemischabgabebereich 78 durchströmende Gemisch aus Abgas und Reaktionsmittel R gelangt dann in den Bereich der ersten Ausströmöffnungen 50, 52, 54, welche entsprechend der bezüglich der Gehäusewand 20 sich ändernden radialen Beabstandung der ersten Trennwand 56 in der Gemischströmungsrichtung S eine abnehmende Querschnittsabmessung, beispielsweise einen abnehmenden Durchmesser, aufweisen.

In der stromaufwärtigen Stirnwand 38 sind in Zuordnung zu dem Abgasströmungsraum 74 in Umfangsrichtung aufeinanderfolgend zweite Einströmöffnungen 80, 82, 84 vorgesehen. Wie durch Strömungspfeile P₈₀, P₈₂, P₈₄ in Fig. 1 angedeutet, tritt durch diese zweiten Einströmöffnungen 80, 82, 84 Abgas aus dem Kanalbereich 32 in den Abgasströmungsraum 74 ein und strömt in Umfangsrichtung vom zweiten Umfangsendbereich 79 zu im ersten Umfangsendbereich 76 vorgesehenen zweiten Ausströmöffnungen 86, 88, 90 in der stromabwärtigen Stirnwand 40. Wie durch Strömungspfeile P₈₆, P₈₈, P₉₀ in Fig. 1 angedeutet, verlässt der den Abgasströmungsraum 74 durchströmende Teil des Abgasstroms die Mischzone 36 zum Kanalbereich 34 hin.

Durch das Bereitstellen des durch die dritte Trennwand 72 zum Gemischströmungsweg 62 begrenzten Abgasströmungsraums 74 wird ein direkter Kontakt des Stroms aus Abgas und Reaktionsmittel R mit der Gehäusewand 20 weitestgehend vermieden. Die Ablenkung des Gemischstroms aus Abgas und Reaktionsmittel R beim Strömen in der Gemischströmungsrichtung S entlang des Gemischströmungswegs 62 erfolgt in den beiden Strömungsablenkbereichen 64, 68 an Strömungsablenkwänden 66, 70, welche zur Gehäusewand 20 einen Abstand aufweisen und im Betrieb an beiden Seiten von Abgas bzw. einem Gemisch aus Abgas und Reaktionsmittel R umströmt werden. Dies ist insbesondere im Startbetrieb vorteilhaft, da dadurch die Gefahr, dass Reaktionsmittel R an der vergleichsweise kalten Gehäusewand 20 kondensiert, weitestgehend ausgeschlossen werden kann. Erst in dem Bereich, in welchem der Gemischstrom aus Abgas und Reaktionsmittel R sich aus dem Gemischabgabebereich 78 zu den ersten Ausströmöffnungen 50, 52, 54 bewegt, kann der Gemischstrom in Kontakt mit der Innenoberfläche der Gehäusewand 20 treten. In diesem Bereich ist jedoch bereits eine effiziente Durchmischung bzw. Verdampfung des Reaktionsmittels R erreicht, so dass die Gefahr der Kondensation von Reaktionsmittel R an der Innenseite der Gehäusewand 20 in diesem Bereich nicht besteht.

In Fig. 2 ist deutlich zu erkennen, dass der Gemischströmungsweg 60 zwischen der ersten Einströmöffnung 48 und den ersten Ausströmöffnungen 50, 52, 54 eine geschwungene, im Wesentlichen S-förmige Struktur aufweist. Um dies im begrenzten Querschnitt des Abgasführungsgehäuses 18 erreichen zu können, ist die Reaktionsmittel-Hauptabgaberichtung H bzw. die Reaktionsmittelabgabelinie L so orientiert, dass sie bezüglich der Gehäuselängsachse L windschief verläuft und diese nicht schneidet. Gleichwohl kann, wie in Fig. 1 erkennbar, die Reaktionsmittelabgabelinie L in einer zur Gehäuselängsachse G im Wesentlichen orthogonalen Ebene liegen. Durch die schräge bzw. tangentiale Einleitung des Reaktionsmittels R wird es möglich, den Gemischströmungsweg 26 mit seiner S-Förmigen Struktur und vergleichswese großer Strömungsfläche in der Mischzone 36 anzuordnen. Gleichzeitig wird durch die Positionierung insbesondere der ersten Trennwand 56 eine direkte Strömungsverbindung zwischen der ersten Einströmöffnung 48 und den ersten Ausströmöffnungen 50, 52, 54 verhindert.

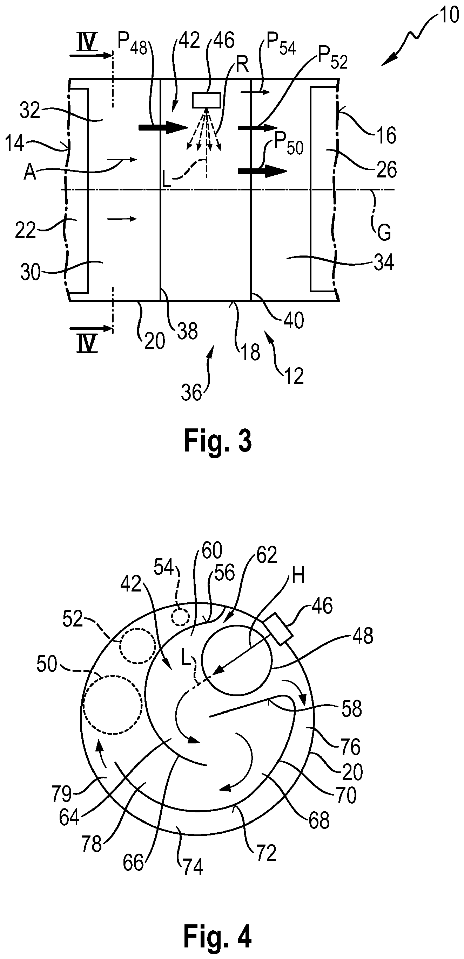

Eine alternative Ausgestaltungsform einer derartigen Mischanordnung 12 ist in den Fig. 3 und 4 dargestellt. Komponenten, welche vorangehend beschriebenen Komponenten hinsichtlich Aufbau bzw. Funktion entsprechen, sind mit den gleichen Bezugszeichen bezeichnet.

Die in den Fig. 3 und 4 dargestellte Ausgestaltung einer Abgas/Reaktionsmittel-Mischanordnung 12 entspricht in wesentlichen Aspekten der vorangehend mit Bezug auf die Fig. 1 und 2 beschriebenen Ausgestaltung. Es wird daher nachfolgend im Wesentlichen nur auf die zwischen den beiden Ausgestaltungsformen bestehenden Unterschiede eingegangen.

Man erkennt insbesondere in Fig. 4, dass bei dieser Ausgestaltung der Abgasströmungsraum 74 nicht von der Mischkammer 42 getrennt ist, sondern in seinen beiden Umfangsendbereichen 76, 78 zu dieser offen ist. Im ersten Umfangsendbereich 76 ist der Abgasströmungsraum 74 zum Gemischerzeugungsbereich 60 offen. Im zweiten Umfangsendbereich 79 ist der Abgasströmungsraum zum Gemischabgabebereich 78 an dessen zu den ersten Ausströmöffnungen 50, 52, 54 führenden Endbereich bzw. zu diesen ersten Ausströmöffnungen 50, 52, 54 offen. Ein Teil des durch die erste Einströmöffnung 48 in die Mischkammer 42 eintretenden Abgases strömt durch den offenen ersten Umfangsendbereich 76 in den Abgasströmungsraum 74 und umströmt dabei die dritte Trennwand 72 an ihrer vom Gemischströmungsweg 62 abgewandten Rückseite und erwärmt diese bzw. entkoppelt diese thermisch von der Gehäusewand 20. Der Abgasstrom durch den Abgasströmungsraum 74 verlässt diesen am zweiten Umfangsendbereich 79 und verlässt die Mischzone 36 durch die ersten Ausströmöffnungen 50, 52, 54. Da bei dieser Ausgestaltungsform keine zum Abgasströmungsraum 74 führenden zweiten Einströmöffnungen und keine aus dem Abgasströmungsraum 74 heraus führenden zweiten Ausströmöffnungen vorhanden sind, bildet die erste Einströmöffnung 48 die einzige Einströmöffnung, während die ersten Ausströmöffnungen 50, 52, 54 die einzigen Ausströmöffnungen dieser Ausgestaltungsform bilden.

Um bei dieser Ausgestaltung eine einfach zu realisierende Struktur zu erreichen, können, wie in Fig. 4 erkennbar, die dritte Trennwand 72 und die zweite Trennwand 58 einstückig miteinander ausgebildet sein und, ebenso wie die erste Trennwand 56 bzw. auch die Stirnwände 38, 40, aus Blechmaterial aufgebaut sein.

Auch bei der in den Fig. 3 und 4 dargestellten Ausgestaltung wird eine einfach zu realisierende Ausgestaltung erreicht, bei welcher durch die geschwungene Struktur des Gemischströmungswegs 62 eine effiziente Durchmischung von Abgas und Reaktionsmittel R auf einem vergleichsweise langen Strömungsweg gewährleistet werden kann.

Es ist darauf hinzuweisen, dass in verschiedenen Ausgestaltungsaspekten die vorangehend beschriebenen Ausgestaltungsformen anders ausgebildet sein können. So können beispielsweise die Anzahlen der verschiedenen Einströmöffnungen bzw. Ausströmöffnungen sich von den dargestellten Anzahlen unterscheiden. Auch die Querschnittsgeometrie dieser Öffnungen kann eine von der dargestellten kreisförmigen Querschnittsgeometrie abweichende Geometrie sein, und auch das Abgasführungsgehäuse kann eine von der dargestellten kreisrunden Querschnittsgeometrie abweichende Querschnittsgeometrie aufweisen.

## Patentansprüche

1. Abgas/Reaktionsmittel-Mischanordnung für eine Abgasanlage (10) einer Brennkraftmaschine zur Durchmischung von Abgas und Reaktionsmittel (R) umfassend:
- ein in Richtung einer Gehäuselängsachse (G) sich erstreckendes Abgasführungsgehäuse (18) mit einer Gehäusewand (20), wobei in dem Abgasführungsgehäuse (18) ein von der Gehäusewand (20) umgebener und von Abgas durchströmbarer Abgaskanal (30) gebildet ist,
- eine Mischzone (36) mit einer zwischen einer stromaufwärtigen Stirnwand (38) und einer stromabwärts bezüglich der stromaufwärtigen Stirnwand (38) angeordneten stromabwärtigen Stirnwand (40) gebildeten Mischkammer (42),
- eine an dem Abgasführungsgehäuse (18) getragene Reaktionsmittelabgabeanordnung (46) zur Abgabe von Reaktionsmittel (R) in die Mischkammer (42) im Wesentlichen entlang einer Reaktionsmittelabgabelinie (L) in einer Reaktionsmittel-Hauptabgaberichtung (H),
wobei in der stromaufwärtigen Stirnwand (38) wenigstens eine erste Einströmöffnung (48) vorgesehen ist, wobei über die wenigstens eine erste Einströmöffnung (48) ein stromaufwärts bezüglich der stromaufwärtigen Stirnwand (38) liegender Bereich (32) des Abgaskanals (30) zu der Mischkammer (42) offen ist,
wobei in der stromabwärtigen Stirnwand (40) wenigstens eine erste Ausströmöffnung (50, 52, 54) vorgesehen ist, wobei über die wenigstens eine erste Ausströmöffnung (50, 52, 54) die Mischkammer (42) zu einem stromabwärts bezüglich der stromabwärtigen Stirnwand (40) liegenden Bereich (34) des Abgaskanals (30) offen ist,
wobei in der Mischkammer (42) ein von der wenigstens einen ersten Einströmöffnung (48) zu der wenigstens einen ersten Ausströmöffnung (50, 52, 54) führender Gemischströmungsweg (62) gebildet ist, wobei der Gemischströmungsweg (62) in einer Gemischströmungsrichtung (S) aufeinanderfolgend umfasst:
- einen Gemischerzeugungsbereich (60) , wobei zur Erzeugung eines Gemisches aus Abgas und Reaktionsmittel (R) in dem Gemischerzeugungsbereich (60) die wenigstens eine erste Einströmöffnung (48) zu dem Gemischerzeugungsbereich (60) offen ist und die Reaktionsmittelabgabeanordnung (46) Reaktionsmittel (R) in den Gemischerzeugungsbereich (60) abgibt,
- einen in der Gemischströmungsrichtung (S) auf den Gemischerzeugungsbereich (60) folgenden ersten Strömungsablenkbereich (64), wobei im ersten Strömungsablenkbereich (64) das aus dem Gemischerzeugungsbereich (60) zum ersten Strömungsablenkbereich (64) strömende Gemisch aus Abgas und Reaktionsmittel (R) in einer ersten Strömungsablenkrichtung abgelenkt wird,
**dadurch gekennzeichnet, dass** der Gemischströmungsweg (62) ferner umfasst:
- einen in der Gemischströmungsrichtung (S) auf den ersten Strömungsablenkbereich (64) folgenden zweiten Strömungsablenkbereich (68), wobei im zweiten Strömungsablenkbereich (68) das aus dem ersten Strömungsablenkbereich (64) zum zweiten Strömungsablenkbereich (68) strömende Gemisch aus Abgas und Reaktionsmittel (R) in einer der ersten Strömungsablenkrichtung entgegengesetzten zweiten Strömungsablenkrichtung abgelenkt wird,
- einen in der Gemischströmungsrichtung (S) auf den zweiten Strömungsablenkbereich (68) folgenden und zu der wenigstens einen ersten Ausströmöffnung (50, 52, 54) führenden Gemischabgabebereich (78).

2. Abgas/Reaktionsmittel-Mischanordnung nach Anspruch 1, **dadurch gekennzeichnet, dass** der Gemischerzeugungsbereich (60) im Wesentlichen begrenzt ist zwischen einer zwischen der stromaufwärtigen Stirnwand (38) und der stromabwärtigen Stirnwand (40) sich erstreckenden ersten Trennwand (56) und einer zwischen der stromaufwärtigen Stirnwand (38) und der stromabwärtigen Stirnwand (40) sich erstreckenden zweiten Trennwand (58), wobei die wenigstens eine erste Einströmöffnung (48) zwischen der ersten Trennwand (56) und der zweiten Trennwand (58) angeordnet ist und die erste Trennwand (56) die wenigstens eine erste Ausströmöffnung (50, 52, 54) gegen direkte Anströmung aus der wenigstens einen ersten Einströmöffnung (48) abschirmt.

3. Abgas/Reaktionsmittel-Mischanordnung nach Anspruch 2, **dadurch gekennzeichnet, dass** die erste Trennwand (56) sich ausgehend von der Gehäusewand (20) zwischen der wenigstens einen ersten Einströmöffnung (48) und der wenigstens einen ersten Ausströmöffnung (50, 52, 54) erstreckt, oder/und dass die erste Trennwand (56) eine erste Strömungsablenkwand (66) des ersten Strömungsablenkbereichs (64) bereitstellt.

4. Abgas/Reaktionsmittel-Mischanordnung nach Anspruch 2 oder 3, **dadurch gekennzeichnet, dass** eine zwischen der stromaufwärtigen Stirnwand (38) und der stromabwärtigen Stirnwand (40) sich erstreckende dritte Trennwand (72) vorgesehen ist, wobei die dritte Trennwand (72) eine Strömungsablenkwand (70) des zweiten Strömungsablenkbereichs (68) bereitstellt oder/und zusammen mit der ersten Trennwand (56) den Gemischabgabebereich (78) begrenzt.

5. Abgas/Reaktionsmittel-Mischanordnung nach Anspruch 4, **dadurch gekennzeichnet, dass** die dritte Trennwand (72) sich entlang eines Umfangsbereichs der Gehäusewand (20) mit radialem Abstand zur Gehäusewand (20) erstreckt, wobei die dritte Trennwand (72) zusammen mit der Gehäusewand (20) einen Abgasströmungsraum (74) begrenzt.

6. Abgas/Reaktionsmittel-Mischanordnung nach Anspruch 5, **dadurch gekennzeichnet, dass** der Abgasströmungsraum (74) durch die dritte Trennwand (72) von der Mischkammer (42) getrennt ist, dass in der stromaufwärtigen Stirnwand (38) wenigstens eine zweite Einströmöffnung (80, 82, 84) vorgesehen ist, wobei über die wenigstens eine zweite Einströmöffnung (80, 82, 84) der stromaufwärts bezüglich der stromaufwärtigen Stirnwand (38) liegende Bereich (32) des Abgaskanals (30) zu dem Abgasströmungsraum (74) offen ist, und dass in der stromabwärtigen Stirnwand (40) wenigstens eine zweite Ausströmöffnung (86, 88, 90) vorgesehen ist, wobei über die wenigstens eine zweite Ausströmöffnung (86, 88, 90) der Abgasströmungsraum (74) zu dem stromabwärts bezüglich der stromabwärtigen Stirnwand (40) liegenden Bereich (34) des Abgaskanals (30) offen ist.

7. Abgas/Reaktionsmittel-Mischanordnung nach Anspruch 6, **dadurch gekennzeichnet, dass** die wenigstens eine zweite Ausströmöffnung (86, 88, 90) und die wenigstens eine zweite Einströmöffnung (80, 82, 84) quer zur Gehäuselängsachse (G) zueinander versetzt sind und einander im Wesentlichen nicht überlappen.

8. Abgas/Reaktionsmittel-Mischanordnung nach Anspruch 5, **dadurch gekennzeichnet, dass** der Abgasströmungsraum (74) in einem ersten Umfangsbereich (76) zu dem Gemischerzeugungsbereich (60) offen ist und in einem zweiten Umfangsendbereich (79) zu dem Gemischabgabebereich (78) oder/und der wenigstens einen ersten Ausströmöffnung (50, 52, 54) offen ist.

9. Abgas/Reaktionsmittel-Mischanordnung nach Anspruch 8, **dadurch gekennzeichnet, dass** die dritte Trennwand (72) mit der zweiten Trennwand (58) einstückig ausgebildet ist.

10. Abgas/Reaktionsmittel-Mischanordnung nach einem der Ansprüche 1-9, **dadurch gekennzeichnet, dass** der Gemischströmungsweg (62) eine im Wesentlichen S-förmige Struktur aufweist.

11. Abgas/Reaktionsmittel-Mischanordnung nach einem der vorangehenden Ansprüche, **dadurch gekennzeichnet, dass** eine Mehrzahl von in Umfangsrichtung aufeinanderfolgenden ersten Ausströmöffnungen (50, 52, 54) vorgesehen ist.

12. Abgas/Reaktionsmittel-Mischanordnung nach Anspruch 11, **dadurch gekennzeichnet, dass** eine Querschnittsabmessung der ersten Ausströmöffnungen (50, 52, 54) in Richtung von dem Gemischabgabebereich (78) weg abnimmt.

13. Abgas/Reaktionsmittel-Mischanordnung nach einem der vorangehenden Ansprüche, **dadurch gekennzeichnet, dass** die Reaktionsmittelabgabeanordnung (46) derart bezüglich der wenigstens einen ersten Einströmöffnung angeordnet ist, dass die Reaktionsmittelabgabelinie (L) sich über die wenigstens eine erste Einströmöffnung (48) hinweg erstreckt oder/und die Gehäuselängsachse (G) nicht schneidet.

14. Abgasanlage für eine Brennkraftmaschine, umfassend eine Abgas/Reaktionsmittel-Mischanordnung (12) nach einem der vorangehenden Ansprüche und stromabwärts der Abgas/Reaktionsmittel-Mischanordnung eine SCR-Katalysatoranordnung (16).

15. Abgasanlage nach Anspruch 14, **dadurch gekennzeichnet, dass** stromaufwärts bezüglich der Abgas/Reaktionsmittel-Mischanordnung (12) eine Abgasbehandlungseinheit , vorzugsweise Partikelfilteranordnung (14), angeordnet ist.

## Claims

1. An exhaust gas/reactant mixing arrangement for an exhaust system (10) of an internal combustion engine for mixing exhaust gas and reactant (R), comprising:
- an exhaust gas guide housing (18) extending in the direction of a housing longitudinal axis (G) and having a housing wall (20), wherein an exhaust gas duct (30), which is surrounded by the housing wall (20) and through which exhaust gas can flow, is formed in the exhaust gas guide housing (18),
- a mixing zone (36) having a mixing chamber (42) formed between an upstream end wall (38) and a downstream end wall (40) arranged downstream with respect to the upstream end wall (38),
- a reactant dispensing arrangement (46), supported on the exhaust gas guide housing (18), for dispensing reactant (R) into the mixing chamber (42) substantially along a reactant dispensing line (L) in a main reactant dispensing direction (H),
wherein at least one first inflow opening (48) is provided in the upstream end wall (38), wherein a region (32) of the exhaust gas duct (30) which is located upstream with respect to the upstream end wall (38) is open to the mixing chamber (42) via the at least one first inflow opening (48),
wherein at least one first outflow opening (50, 52, 54) is provided in the downstream end wall (40), wherein the mixing chamber (42) is open via the at least one first outflow opening (50, 52, 54) to a region (34) of the exhaust gas duct (30) which is located downstream with respect to the downstream end wall (40),
wherein a mixture flow path (62) leading from the at least one first inflow opening (48) to the at least one first outflow opening (50, 52, 54) is formed in the mixing chamber (42), wherein the mixture flow path (62) comprises the following successively in the mixture flow direction (5):
- a mixture producing region (60), wherein, in order to produce a mixture of exhaust gas and reactant (R) in the mixture producing region (60), the at least one first inflow opening (48) is open to the mixture producing region (60), and the reactant dispensing arrangement (46) dispenses reactant (R) into the mixture producing region (60),
- a first flow deflection region (64) following the mixture producing region (60) in the mixture flow direction (5), wherein the mixture of exhaust gas and reactant (R) flowing from the mixture producing region (60) to the first flow deflection region (64) is deflected in a first flow deflection direction in the first flow deflection region (64),
**characterized in that** the mixture flow path (62) further comprises:
- a second flow deflection region (68) following the first flow deflection region (64) in the mixture flow direction (5), wherein the mixture of exhaust gas and reactant (R) flowing from the first flow deflection region (64) to the second flow deflection region (68) is deflected in a second flow deflection direction opposite the first flow deflection direction in the second flow deflection region (68),
- a mixture dispensing region (78) following the second flow deflection region (68) in the mixture flow direction (S) and leading to the at least one first outflow opening (50, 52, 54).

2. The exhaust gas/reactant mixing arrangement as claimed in claim 1, **characterized in that** the mixture producing region (60) is delimited substantially between a first dividing wall (56), which extends between the upstream end wall (38) and the downstream end wall (40), and a second dividing wall (58), which extends between the upstream end wall (38) and the downstream end wall (40), wherein the at least one first inflow opening (48) is arranged between the first dividing wall (56) and the second dividing wall (58), and the first dividing wall (56) shields the at least one first outflow opening (50, 52, 54) from direct inflow from the at least one first inflow opening (48).

3. The exhaust gas/reactant mixing arrangement as claimed in claim 2, **characterized in that** the first dividing wall (56), starting from the housing wall (20), extends between the at least one first inflow opening (48) and the at least one first outflow opening (50, 52, 54), or/and **in that** the first dividing wall (56) provides a first flow deflection wall (66) of the first flow deflection region (64).

4. The exhaust gas/reactant mixing arrangement as claimed in claim 2 or 3, **characterized in that** a third dividing wall (72), which extends between the upstream end wall (38) and the downstream end wall (40), is provided, wherein the third dividing wall (72) provides a flow deflection wall (70) of the second flow deflection region (68) or/and delimits the mixture dispensing region (78) together with the first dividing wall (56).

5. The exhaust gas/reactant mixing arrangement as claimed in claim 4, **characterized in that** the third dividing wall (72) extends along a circumferential region of the housing wall (20) at a radial distance from the housing wall (20), wherein the third dividing wall (72), together with the housing wall (20), delimits an exhaust gas flow space (74).

6. The exhaust gas/reactant mixing arrangement as claimed in claim 5, **characterized in that** the exhaust gas flow space (74) is separated from the mixing chamber (42) by the third dividing wall (72), **in that** at least one second inflow opening (80, 82, 84) is provided in the upstream end wall (38), wherein that region (32) of the exhaust gas duct (30) which is located upstream with respect to the upstream end wall (38) is open to the exhaust gas flow space (74) via the at least one second inflow opening (80, 82, 84), and **in that** at least one second outflow opening (86, 88, 90) is provided in the downstream end wall (40), wherein the exhaust gas flow space (74) is open to that region (34) of the exhaust gas duct (30) which is located downstream with respect to the downstream end wall (40) via the at least one second outflow opening (86, 88, 90).

7. The exhaust gas/reactant mixing arrangement as claimed in claim 6, **characterized in that** the at least one second outflow opening (86, 88, 90) and the at least one second inflow opening (80, 82, 84) are offset with respect to one another transversely with respect to the housing longitudinal axis (G) and substantially do not overlap one another.

8. The exhaust gas/reactant mixing arrangement as claimed in claim 5, **characterized in that** the exhaust gas flow space (74) is open in a first circumferential region (76) to the mixture producing region (60) and is open in a second circumferential end region (79) to the mixture dispensing region (78) or/and the at least one first outflow opening (50, 52, 54).

9. The exhaust gas/reactant mixing arrangement as claimed in claim 8, **characterized in that** the third dividing wall (72) is formed integrally with the second dividing wall (58).

10. The exhaust gas/reactant mixing arrangement as claimed in any of claims 1-9, **characterized in that** the mixture flow path (62) has a substantially S-shaped structure.

11. The exhaust gas/reactant mixing arrangement as claimed in any of the preceding claims, **characterized in that** a plurality of first outflow openings (50, 52, 54) which follow one another in the circumferential direction is provided.

12. The exhaust gas/reactant mixing arrangement as claimed in claim 11, **characterized in that** a cross-sectional dimension of the first outflow openings (50, 52, 54) decreases in the direction away from the mixture dispensing region (78).

13. The exhaust gas/reactant mixing arrangement as claimed in any of the preceding claims, **characterized in that** the reactant dispensing arrangement (46) is arranged in such a way with respect to the at least one first inflow opening that the reactant dispensing line (L) extends across the at least one first inflow opening (48) or/and does not intersect the housing longitudinal axis (G).

14. An exhaust system for an internal combustion engine, comprising an exhaust gas/reactant mixing arrangement (12) as claimed in any of the preceding claims and, downstream of the exhaust gas/reactant mixing arrangement, an SCR catalytic converter arrangement (16).

15. The exhaust system as claimed in claim 14, **characterized in that** an exhaust gas treatment unit, preferably a particle filter arrangement (14), is arranged upstream with respect to the exhaust gas/reactant mixing arrangement (12).

## Revendications

1. Un dispositif de mélange de gaz d'échappement/réactif pour un système d'échappement (10) d'un moteur à combustion interne pour mélanger des gaz d'échappement et du réactif (R), comprenant :
- un boîtier de guidage des gaz d'échappement (18) s'étendant dans la direction de l'axe longitudinal du boîtier (G) et comportant une paroi de boîtier (20), dans lequel un conduit de gaz d'échappement (30), entouré par la paroi de boîtier (20) et à travers lequel les gaz d'échappement peuvent s'écouler, est formé dans le boîtier de guidage des gaz d'échappement (18),
- une zone de mélange (36) comportant une chambre de mélange (42) formée entre une paroi d'extrémité amont (38) et une paroi d'extrémité aval (40) disposée en aval par rapport à la paroi d'extrémité amont (38),
- un dispositif de distribution de réactif (46), supporté par le boîtier de guidage des gaz d'échappement (18), pour distribuer le réactif (R) dans la chambre de mélange (42) essentiellement le long d'une ligne de distribution du réactif (L) dans une direction principale de distribution du réactif (H),
dans lequel au moins une première ouverture d'écoulement d'entrée (48) est prévue dans la paroi d'extrémité amont (38), dans lequel une zone (32) du conduit de gaz d'échappement (30) située en amont par rapport à la paroi d'extrémité amont (38) est ouverte à la chambre de mélange (42) via ladite au moins une première ouverture d'écoulement d'entrée (48),
dans lequel au moins une première ouverture d'écoulement de sortie (50, 52, 54) est prévue dans la paroi d'extrémité aval (40), dans lequel la chambre de mélange (42) est ouverte via ladite au moins une première ouverture d'écoulement de sortie (50, 52, 54) à une zone (34) du conduit de gaz d'échappement (30) qui est située en aval par rapport à la paroi d'extrémité aval (40),
dans lequel une voie d'écoulement de mélange (62) menant de ladite au moins une première ouverture d'écoulement d'entrée (48) à ladite au moins une première ouverture d'écoulement de sortie (50, 52, 54) est formée dans la chambre de mélange (42), dans lequel la voie d'écoulement de mélange (62) comprend successivement dans la direction d'écoulement du mélange (S) :
- une zone de production de mélange (60), dans lequel, afin de produire un mélange de gaz d'échappement et de réactif (R) dans la zone de production de mélange (60), ladite au moins une première ouverture d'écoulement d'entrée (48) est ouverte vers la zone de production de mélange (60), et le dispositif de distribution de réactif (46) distribue le réactif (R) dans la zone de production de mélange (60),
- une première zone de déviation d'écoulement (64) suivant la zone de production de mélange (60) dans la direction d'écoulement du mélange (5), dans lequel le mélange de gaz d'échappement et de réactif (R) s'écoulant de la zone de production de mélange (60) vers la première zone de déviation d'écoulement (64) est dévié dans une première direction d'écoulement dans la première zone de déviation d'écoulement (64),
**caractérisé en ce que** la voie d'écoulement de mélange (62) comprend en outre :
- une deuxième zone de déviation (68) suivant la première zone de déviation (64) dans la direction d'écoulement du mélange (5), dans lequel le mélange de gaz d'échappement et de réactif (R) s'écoulant de la première zone de déviation (64) vers la deuxième zone de déviation (68) est dévié dans une deuxième direction de déviation opposée à la première direction de déviation dans la deuxième zone de déviation (68),
- une zone de distribution du mélange (78) suivant la deuxième zone de déviation d'écoulement (68) dans la direction d'écoulement du mélange (S) et menant à ladite au moins une première ouverture d'écoulement de sortie (50, 52, 54).

2. Le dispositif de mélange de gaz d'échappement/réactif selon la revendication 1, **caractérisé en ce que** la zone de production de mélange (60) est délimitée sensiblement entre une première paroi de séparation (56), qui s'étend entre la paroi d'extrémité amont (38) et la paroi d'extrémité aval (40), et une deuxième paroi de séparation (58), qui s'étend entre la paroi d'extrémité amont (38) et la paroi d'extrémité aval (40), dans lequel ladite au moins une première ouverture d'écoulement d'entrée (48) est disposée entre la première paroi de séparation (56) et la deuxième paroi de séparation (58), et la première paroi de séparation (56) protège au moins une première ouverture d'écoulement de sortie (50, 52, 54) de l'entrée directe depuis au moins une première ouverture d'écoulement d'entrée (48).

3. Le dispositif de mélange de gaz d'échappement/réactif selon la revendication 2, **caractérisé en ce que** la première paroi de séparation (56) s'étend à partir de la paroi de boîtier (20) entre ladite au moins une première ouverture d'écoulement d'entrée (48) et ladite au moins une première ouverture d'écoulement de sortie (50, 52, 54), ou/et **en ce que** la première paroi de séparation (56) constitue une première paroi de déviation d'écoulement (66) de la première zone de déviation d'écoulement (64).

4. Le dispositif de mélange de gaz d'échappement/réactif selon la revendication 2 ou 3, **caractérisé en ce qu'**une troisième paroi de séparation (72), qui s'étend entre la paroi d'extrémité amont (38) et la paroi d'extrémité aval (40), est prévue, dans lequel la troisième paroi de séparation (72) constitue une paroi de déviation d'écoulement (70) de la deuxième zone de déviation d'écoulement (68) ou/et délimite la zone de distribution du mélange (78) en même temps que la première paroi de séparation (56).

5. Le dispositif de mélange de gaz d'échappement/réactif selon la revendication 4, **caractérisé en ce que** la troisième paroi de séparation (72) s'étend le long d'une zone circonférentielle de la paroi de boîtier (20) à une distance radiale de la paroi de boîtier (20), dans lequel la troisième paroi de séparation (72) délimite, avec la paroi de boîtier (20), un espace d'écoulement des gaz d'échappement (74).

6. Le dispositif de mélange de gaz d'échappement/réactif selon la revendication 5, **caractérisé en ce que** l'espace d'écoulement des gaz d'échappement (74) est séparé de la chambre de mélange (42) par la troisième paroi de séparation (72), **en ce qu'**au moins une deuxième ouverture d'écoulement d'entrée (80, 82, 84) est prévue dans la paroi d'extrémité amont (38), dans lequel la zone (32) du conduit de gaz d'échappement (30) située en amont par rapport à la paroi d'extrémité amont (38) est ouverte à l'espace d'écoulement des gaz d'échappement (74) par l'intermédiaire de ladite au moins une deuxième ouverture d'écoulement d'entrée (80, 82, 84), et **en ce qu'**au moins une deuxième ouverture d'écoulement de sortie (86, 88, 90) est prévue dans la paroi d'extrémité aval (40), dans laquelle l'espace d'écoulement des gaz d'échappement (74) est ouvert à la zone (34) du conduit de gaz d'échappement (30) qui est située en aval par rapport à la paroi d'extrémité aval (40) via ladite au moins une deuxième ouverture d'écoulement de sortie (86, 88, 90).

7. Le dispositif de mélange de gaz d'échappement/réactif selon la revendication 6, **caractérisé en ce que** ladite au moins une deuxième ouverture d'écoulement de sortie (86, 88, 90) et ladite au moins une deuxième ouverture d'écoulement d'entrée (80, 82, 84) sont décalées l'une par rapport à l'autre transversalement par rapport à l'axe longitudinal du boîtier (G) et ne se chevauchent pratiquement pas l'une l'autre.

8. Le dispositif de mélange de gaz d'échappement/réactif selon la revendication 5, **caractérisé en ce que** l'espace d'écoulement des gaz d'échappement (74) est ouvert dans une première zone circonférentielle (76) à la zone de production de mélange (60) et est ouvert dans une deuxième zone d'extrémité circonférentielle (79) à la zone de distribution du mélange (78) ou/et à ladite au moins une première ouverture d'écoulement de sortie (50, 52, 54).

9. Le dispositif de mélange de gaz d'échappement/réactif selon la revendication 8, **caractérisé en ce que** la troisième paroi de séparation (72) est formée intégralement avec la deuxième paroi de séparation (58).

10. Le dispositif de mélange de gaz d'échappement/réactif selon l'une des revendications 1 à 9, **caractérisé en ce que** la voie d'écoulement de mélange (62) a une structure sensiblement en forme de S.

11. Le dispositif de mélange de gaz d'échappement/réactif selon l'une des revendications précédentes, **caractérisé en ce qu'**une pluralité de premières ouvertures d'écoulement (50, 52, 54) se succèdent dans la direction circonférentielle est prévue.

12. Le dispositif de mélange de gaz d'échappement/réactif selon la revendication 11, **caractérisé en ce qu'**une dimension de section transversale des premières ouvertures d'écoulement (50, 52, 54) diminue dans la direction opposée à la zone de distribution du mélange (78).

13. Le dispositif de mélange de gaz d'échappement/réactif selon l'une des revendications précédentes, **caractérisé en ce que** le dispositif de distribution de réactif (46) est disposé de telle manière, par rapport à ladite au moins une première ouverture d'écoulement d'entrée, que la ligne de distribution du réactif (L) s'étend à travers ladite au moins une première ouverture d'écoulement d'entrée (48) ou/et ne coupe pas l'axe longitudinal du boîtier (G).

14. Un système d'échappement pour un moteur à combustion interne, comprenant un dispositif de mélange de gaz d'échappement/réactif (12) selon l'une des revendications précédentes et, en aval du dispositif de mélange de gaz d'échappement/réactif, un dispositif de convertisseur catalytique SCR (16).

15. Le système d'échappement selon la revendication 14, **caractérisé en ce qu'**une unité de traitement des gaz d'échappement, de préférence un dispositif de filtre à particules (14), est disposée en amont par rapport au dispositif de mélange de gaz d'échappement/réactif (12).
